Europäisches Patentamt

European Patent Office

Office européen des brevets

(11) Numéro de publication: **0 204 630**
A1

## DEMANDE DE BREVET EUROPEEN

(21) Numéro de dépôt: 86401170.5

(22) Date de dépôt: 02.06.86

(51) Int. Cl.⁴: **B01D 46/30** , B01D 29/08

(30) Priorité: 04.06.85 FR 8508414

(43) Date de publication de la demande:
10.12.86 Bulletin 86/50

(84) Etats contractants désignés:
AT BE CH DE GB IT LI LU NL SE

(71) Demandeur: **Hauville, François**
**264, rue de la Villette Saint Pierre les Elbeuf**
**F-76320 Caudebec-les-Elbeuf(FR)**

(72) Inventeur: **Hauville, François**
**264, rue de la Villette Saint Pierre les Elbeuf**
**F-76320 Caudebec-les-Elbeuf(FR)**

(74) Mandataire: **Armengaud, Charles**
**Cabinet ARMENGAUD AINE 3, Avenue**
**Bugeaud**
**F-75116 Paris(FR)**

(54) Filtre à matériau filtrant granulaire contenu dans une enveloppe rigide.

(57) Filtre à matériau filtrant granulaire contenu dans une enveloppe rigide, caractérisé en ce que l'enveloppe (1) contenant le matériau granulaire comporte une hausse, ou réserve de matériau granulaire surmontant la masse de matériau filtrant constituant la colonne de filtration et débouchant sur elle, cette hausse, prévue à la partie supérieure de l'enveloppe étant constituée par une pluralité de cellules (2) formées par un système de cloisonnement (3). En vue du remplissage de l'enveloppe et de la réserve granulaire, l'enveloppe (1) est munie d'un orifice de remplissage (5) prévu à l'opposé de la réserve granulaire.

EP 0 204 630 A1

## FILTRE A MATERIAU FILTRANT GRANULAIRE CONTENU DANS UNE ENVELOPPE RIGIDE

La présente invention se rapporte aux filtres à matériau granulaire filtrant ou adsorbant contenu dans une enveloppe rigide traversée par les fluides destinés à être épurés et elle a pour but d'éviter la formation, dans le matériau granulaire, de passages par lesquels les fluides à filtrer s'engagent préférentiellement traversant ainsi la couche granulaire à des vitesses trop élevées, sans subir l'épuration ou la transformation souhaitées.

Dans les filtres du genre considéré, il se forme constamment, après remplissage, transport ou manipulation de ces filtres, au sein de la matière granulaire, des inégalités d'homogénéité de la masse granulaire, se traduisant par des tassements ou des détassements dus aux déplacements granulaires, ou dans le cas où la matière granulaire consiste en des grains de carbone, à la dégradation du calibre initial des grains, provoquant alors des passages préférentiels du fluide à filtrer à travers le filtre. Il en est ainsi en particulier des filtres équipant les cartouches de masques à gaz, de hottes de laboratoires, de centrales d'épuration d'air, etc. . .

Ces phénomènes de tassement ou de détassement se produisent particulièrement au cours de manipulations, de transport, d'utilisation, sous l'effet de chocs ou de vibrations qui détruisent l'organisation granulaire homogène d'origine.

Ce phénomène de désorganisation granulaire s'accentue quand la colonne granulaire filtrante est placée verticalement car elle est plus sensible au tassement, permettant ainsi la formation de véritables "trous" de filtration en partie haute du filtre. C'est le cas par exemple des cartouches filtrantes disposées verticalement en série, sous forme de batteries, dans les caissons à filtration des hottes de laboratoire ou des grandes installations d'épuration d'air des usines, aéroports, hôpitaux, etc. . .

Il est bien connu que les filtres à adsorption de molécules, comme par exemple les filtres de charbon actif disposés verticalement en série, ne valent que par la constante du calibrage de chacun de leur passage d'air et que, dès que ces constantes de calibrage sont déformées par une désorganisation granulaire, l'ensemble de la batterie de filtres ne remplit plus sa fonction filtrante.

Pour éviter ces phénomènes de désorganisation granulaire se manifestant par un détassement ou un tassement, il est connu d'exercer une pression constante sur la surface de la masse granulaire, par exemple au moyen de plaques ou analogues, sollicitées par un ou des ressorts. Cependant ces systèmes de pression constante occasionnent de par leur permanence, le plus souvent des phénomènes de voûtage après détassement et empêchent le comblement de la cavité ainsi formée, favorisant le passage préférentiel du fluide à filtrer et provoquant la fuite de filtration que l'on veut justement éviter.

L'invention permet d'éliminer radicalement tous ces inconvénients.

Elle consiste essentiellement à faire comporter à l'enveloppe contenant le matériau filtrant granulaire, une réserve, ou hausse de matériau granulaire, non traversée par le fluide à filtrer, surmontant la masse de matériau filtrant constituant la colonne de filtration et débouchant sur elle.

Cette réserve granulaire peut donc, par gravité, s'écouler librement et à tout moment au cours du détassement de la colonne de filtration et ainsi combler l'espace filtrant défaillant. L'invention est donc particulièrement bien adaptée aux filtres dont le matériau filtrant granulaire est constitué par du charbon actif, où les vitesses du fluide à filtrer à travers la couche adsorbante constituée par le matériau granulaire doivent être constantes en tous les points de passage.

Les divers caractéristiques et avantages de l'invention ressortiront de la description qui va suivre d'une de ses formes possible de réalisation.

Il est bien précisé qu'il s'agit uniquement d'un exemple et que toutes autres formes, proportions et dispositions pourraient être adoptées sans sortir du cadre de l'invention.

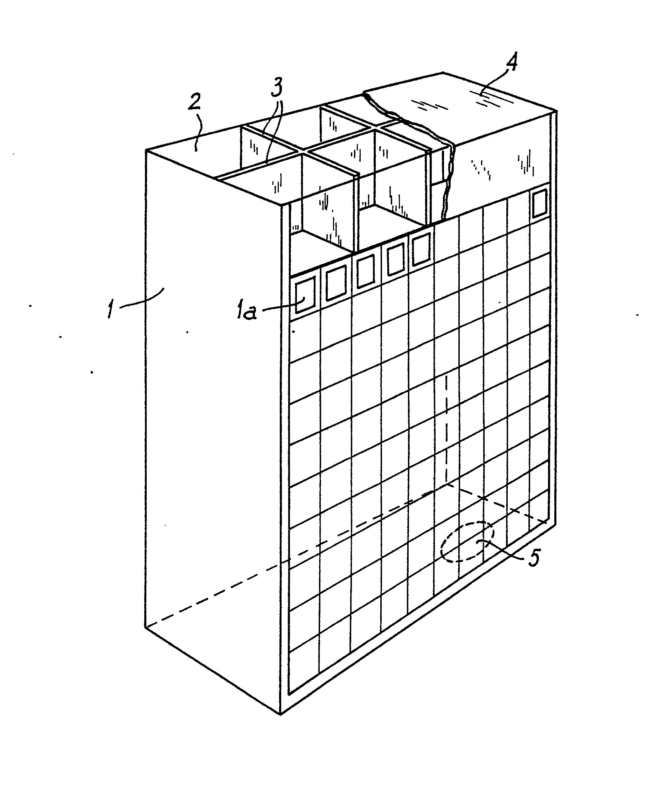

Au cours de cette description, on se réfère au dessin ci-joint dont la figure unique montre, en perspective un filtre perfectionné suivant l'invention.

L'enveloppe 1 du filtre, en toute matière quelconque convenable, contenant le matériau granulaire filtrant et dont les faces filtrantes comportent des orifices la est munie, à sa partie supérieure et au-dessus de la colonne de filtration constituée par la masse filtrante, d'une réserve, remplie de matériau granulaire.

Dans l'exemple traité, cette réserve est constituée par une pluralité de cellules 2 déterminées par un système de cloisonnement 3, ces cellules étant sans fond et débouchant directement sur la masse filtrante. La conception cellulaire, selon l'invention, de la réserve granulaire permet d'éviter qu'une pente de vide due au délestage de la réserve lors du détassement, n'atteigne trop rapidement la partie perforée de l'enveloppe du filtre, occasionnant ainsi une fuite de filtration.

La réserve est obturée par un couvercle 4, éventuellement amovible.

L'enveloppe du filtre est avantageusement remplie par gravité "la tête en bas" c'est-à-dire dans la position inverse de celle que le filtre occupe en place pour la filtration. Ce remplissage est effectué par un orifice 5, placé à l'opposé de la réserve granulaire, ce qui permet aux cellules formées par la division du volume de la réserve de se remplir complètement.

Les filtres selon l'invention sont avantageusement emballés, transportés et stockés "la tête en bas" c'est-à-dire la réserve granulaire en bas, afin que le tassement de la colonne de filtration soit maximal dans la réserve.

Cette façon d'opérer a pour avantage essentiel de reconstituer par gravité l'organisation granulaire initiale de la colonne de filtration du filtre au moment où celui-ci est retourné pour sa mise en service, annulant ainsi les effets néfastes décrits plus haut.

Bien entendu, l'invention n'est pas limitée à forme de réalisation décrite et représentée mais peut donner lieu à de nombreuses variantes touchant par exemple la forme du filtre, la constitution de la réserve, etc. . . sans que, ce faisant, on sorte de son cadre.

## Revendications

1. Filtre à matériau filtrant granulaire contenu dans une enveloppe rigide, caractérisé en ce que l'enveloppe (1) contenant le matériau granulaire comporte une hausse, ou réserve, de matériau granulaire surmontant la masse de matériau filtrant constituant la colonne de filtration et débouchant sur elle.

2. Filtre suivant la revendication 1, caractérisé en ce que la hausse ou réserve prévue à la partie superieure de l'enveloppe (1) est constituée par une pluralité de cellules (2) formées par un système de cloisonnement (3).

3. Filtre suivant l'une quelconque des revendications précédentes, caractérisé en ce que, en vue du remplissage de l'enveloppe et du remplissage de la réserve granulaire, l'enveloppe (1) est munie d'un orifice de remplissage (5) prévu à l'opposé de la réserve granulaire.

4. Filtre suivant l'une quelconque des revendications précédentes, caractérisé en ce qu'il est rempli, conditionné, transporté, stocké et manutentionné la "tête en bas", dans une position inverse de celle qu'il occupe une fois en place pour la filtration.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A- 712 342 (COMPAGNIE FRANCAISE DE PRODUITS ORGANO-CHIMIQUES) * En entier * | 1 | B 01 D 46/30<br>B 01 D 29/08 |
| A | DE-A-3 002 624 (H. DURAS) | | |
| A | GB-A- 984 844 (VOKES LTD.) | | |
| A | DE-A-2 714 972 (E. HILGEROTH) | | |

| | DOMAINES TECHNIQUES RECHERCHES (Int. Cl.4) |
|---|---|
| | B 01 D<br>C 10 K |

Le présent rapport de recherche a été établi pour toutes les revendications

| Lieu de la recherche | Date d'achèvement de la recherche | Examinateur |
|---|---|---|
| LA HAYE | 07-07-1986 | PYFFEROEN K. |